# EUROPEAN PATENT SPECIFICATION

(11) **EP 1 661 786 B1**
(45) Date of publication and mention of the grant of the patent: **22.08.2007**
(21) Application number: 04766923.9
(22) Date of filing: 25.08.2004
(51) Int. Cl.: B62B 1/12

(54) **FOLDABLE SHOPPING TROLLEY**
ZUSAMMENKLAPPBARER EINKAUFSWAGEN
CHARIOT PLIABLE DESTINE AUX ACHATS

(30) Priority: 01.09.2003 ES 200302054
(43) Date of publication of application: 31.05.2006
(73) Proprietor: Germans Server, S.L., 03750 Pedreguer (Alicante) (ES)
(72) Inventor: SERVER PEREZ, Juan, E-03750 Pedreguer (Alicante) (ES)
(74) Representative: Ungria Lopez, Javier
(86) International application number: PCT/ES2004/000384
(87) International publication number: WO 2005/021352

(56) References cited:
- EP-A1- 0 749 885
- ES-A6- 2 008 229
- ES-A6- 2 011 354
- ES-T3- 2 051 407

## Description

### OBJECT OF THE INVENTION

As expressed in the title of this specification, the present invention as defined in claim 1 refers to a folding shopping cart, which is of the type that have their wheels mounted in a folding manner in order to be able to have an unfolded position or usage position and a folded position. Furthermore, it comprises a folding structure with respect to the base of the cart, whose structure comprises two frames, one of them extendible with respect to the other one in order to be able to take the unfolded usage position and to constitute a grasping and pulling handle, whereas the sliding or extendible frame can also take a folded position that along with the folding of the wheels and of the bag itself of the cart make it possible to carry the empty cart as if it were a bag.

The object of the invention is to achieve the improvements of the performance qualities of said type of cart, specifically those of reinforcing the connections and joints between certain parts or elements, as well as the folding/unfolding operations, based on a series of novelties that affect the blocking/unblocking means of the two frames that form the handle structure, as well as the means for linking the frames to the base, as well as the means for permitting blocking/unblocking said structure and the support structure of the wheels with respect to the cited base of the cart.

### BACKGROUND OF THE INVENTION

Spanish patents of invention P8702726 and P8802023, whose patentee is the current applicant as well as ES 2051407 T3 and EP 0749885 A1, describe a folding shopping cart that includes a tray-like rigid base where the bottom of the corresponding bag of the cart rests and is fastened. Two wheels that can take on a normal usage position or a collapsed position are assembled on said base. In the collapsed position the wheels independently fold over the bottom surface of the cited base of the cart.

The assembling supports of said wheels are blocked in the usage position by means of respective detachable parts, by means of which the structure that is formed by the classic frame constituting the grasping handle in order to pull the cart, is connected to the base of the cart.

The cited detachable parts are integral to the bottom end of the branches that form part one of the frames, specifically the stationary one, although the frame can fold by unblocking said detachable parts with respect to the base, whereas the other frame slides with respect to the other one in order to occupy an extendible or usage position, or to take on a retracting position, wherein this second frame is overlaid the first frame. This reduces the length of the structure that both frames forms in order to permit the folding thereof and the corresponding carrying thereof as if it were a bag, when the bag of the cart is empty and the wheels are folded.

Both frames have two branches connected to each other by means of a bridge constituting the grasping handle.

The sliding of one frame with respect to the other is achieved by means of two double sleeves, in each one of which two bushings are formed, one fastened to the respective branch of the sliding frame, whereas the other bushing slides all along the corresponding branch of the frame that is considered to be stationary.

The two above-mentioned frames preferably have a quadrangular section in order to prevent the same from moving sideways.

On their part, each one of the detachable connecting parts of the frame fastened to the base, is formed by a square bar wherein the end of the branch of said frame is precisely fastened. Said part is assembled in each case between a pair of lugs belonging to the base, assembly that is jointed in order to permit collapsing towards the folding/unfolding position of the frame and therefore of the structure that said frame forms with the sliding frame.

### DESCRIPTION OF THE INVENTION

The shopping cart of the invention as defined in claim 1 is based on the type described in the patents referred to in the preceding section, including a series of improvements and innovations that contribute both to reinforcing the connections as well as the joints between parts or elements, as well as to optimize the folding/unfolding of the cart and to provide some better performance qualities from the structural, functional points of view for the user's convenience.

One of the improvements consists of the fact that the two bushings of the double sleeves, that slide along the branches of the stationary frame have outside an interlocking finger for a retractable latch provided for this purpose in correspondence with points close to the ends of the bridge itself of the stationary frames. The center area of said bridge has in correspondence with the bottom surface thereof, with a manually operated push button, which is connected to the aforementioned two locking latches, in such a way that in the inoperative position of the push button the latches are arranged towards an operating position. These latches lock in the interlocking fingers of the bushings when the corresponding frame is in the maximum extendible position, causing the blocking between both frames in said unfolded position. Now then, if pressure is exerted on the push button, the latches retract by tilting and they are released with respect to the fingers of the bushings, permitting the sliding towards the folding position between both frames .

Another improvement consists in that the part by which the stationary frame is fastened to the base of the cart, there is a flexible fin, approximately at a right angle, which in the normal usage or operative position is locked on the edge of the partition wheel so that the bottom surface of the base, immobilizing the detachable part and therefore the stationary frame connected thereto. This flexible fin faces the bottom end of the sliding frame, in such a way that when the sliding frame withdraws to the maximum said bottom end of the sliding frame contacts and presses on said flexible fin, producing its unlocking and therefore the release of the blocking of the detachable part. This makes it possible to collapse said detachable part, as well as to collapse and correspondingly fold the wheels and therefore the folding of the whole cart.

Another characteristic corresponds to the way of assembling and collapsing the wheels, each one of the wheels being supported on an M-shaped support with three jointable support points. The joint is preferably comprised of a through shaft through said three support points. In the normal usage position, one of the M-shaped ends of each support is housed in a hollow formed for this purpose in the base, with an open part that closes by means of a side wing of the detachable part, in such a way that when the latter tilts the open side part of the hollow where the end of the M-shaped support is housed, can tilt in order to carry out the folding thereof and therefore of the wheels.

The three jointable support points of said supports of the wheels correspond to the ends of the support and to the center vertex, wherein one of the two other M-shaped vertexes, constitute a side assembly means of the wheel itself, the other vertex comprising a support on the ground, in the vertical position of the cart.

### BRIEF DESCRIPTION OF THE DRAWINGS

In order to complete the description that is going to be made hereinafter and for the purpose of providing a better understanding of the characteristics of the invention, a set of drawings based on which the innovations and advantages of the folding cart object of the invention will be more easily understood, is attached to this specification.

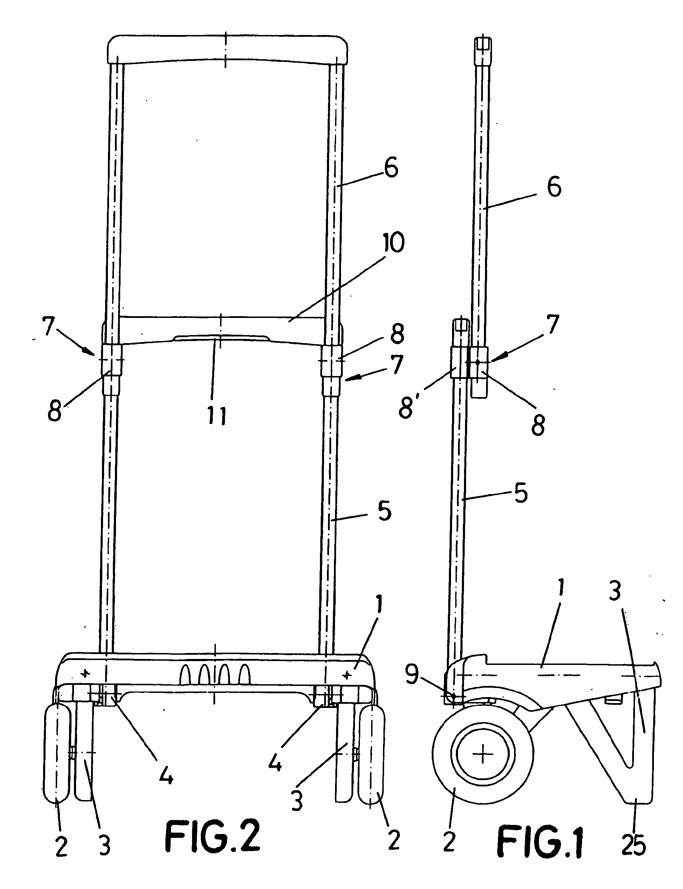

Figure 1 shows a side raised view of the cart in an unfolded position.

Figure 2 shows a front view of the same cart as the one represented in the preceding figure.

Figure 3 shows a side view of the cart in a folded position.

Figure 4 shows a plan view under the folded cart.

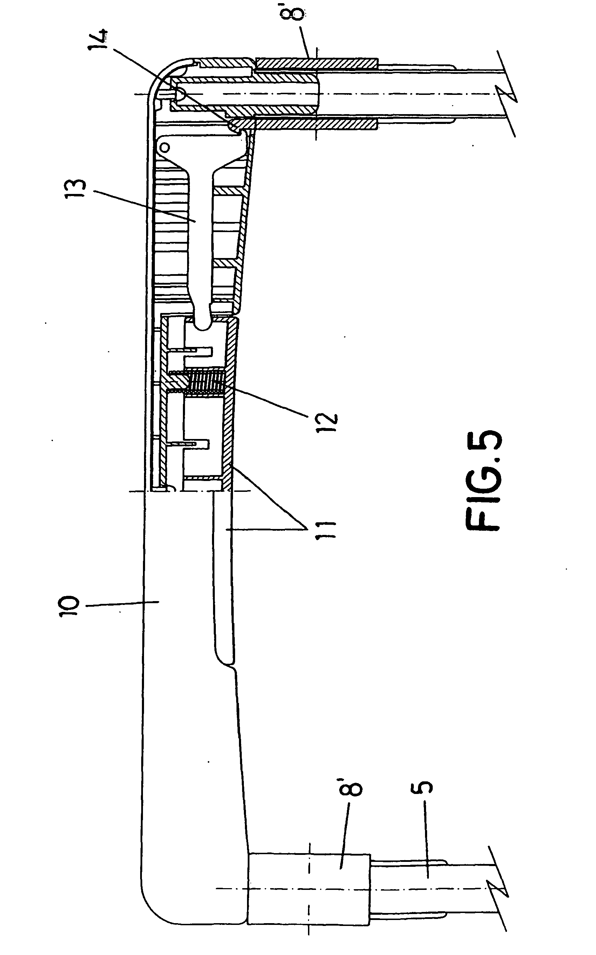

Figure 5 shows a view with one part in a longitudinal section of the bridge corresponding to the stationary frame of the two that form part of the cart, allowing one to see the push button assembled on this bridge and the blocking means in order to immobilize a frame with respect to the other one in the extended position.

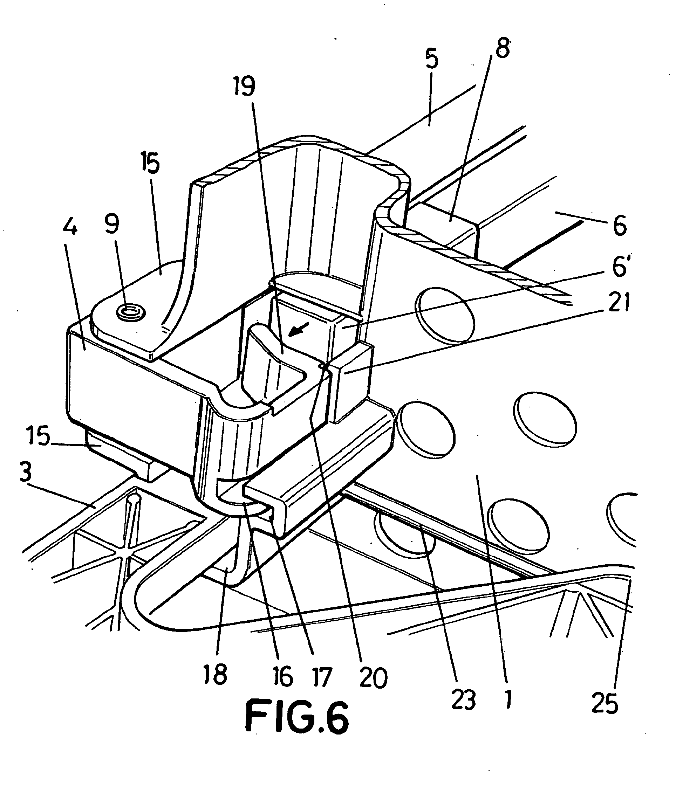

Figure 6 shows a perspective view of the assembly of one of the detachable parts to which the corresponding stationary frame is fastened. One can see a sector of the base of the cart, as well as the parts and elements that take part in the blocking and unblocking functions of said part, and of the frame, as well as of the respective support of the wheel provided on that side.

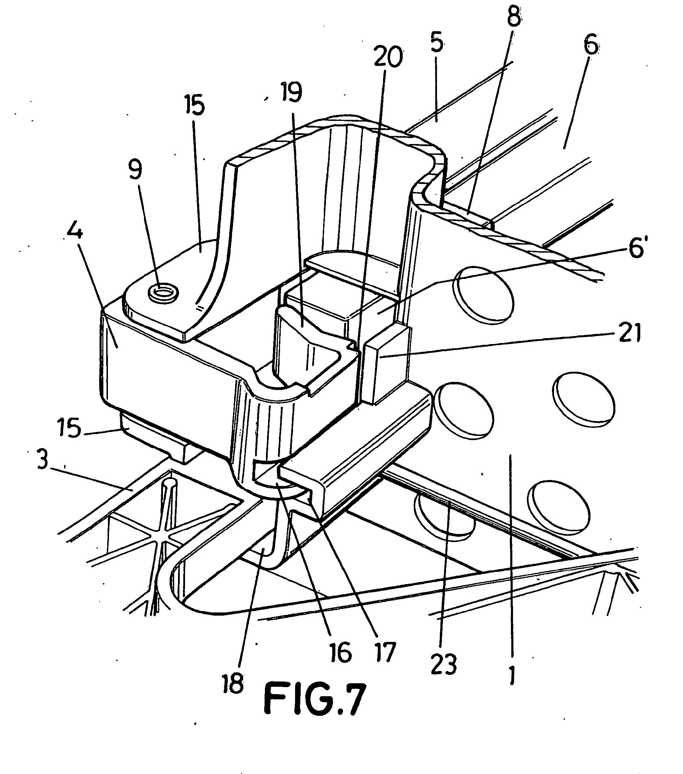

Figure 7 shows how the end corresponding to the sliding frame contacts the flexible fin of the detachable part in order to carry out the unblocking of the detachable part.

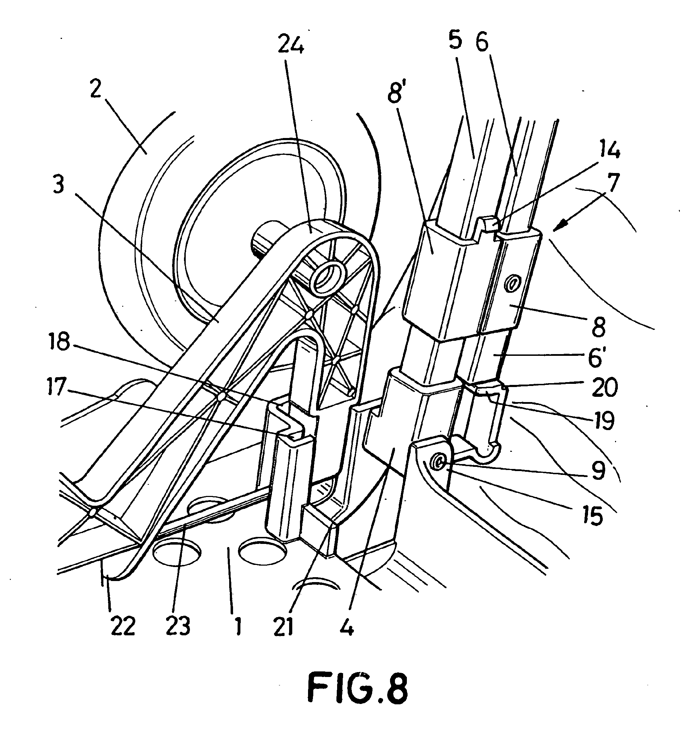

Figure 8 shows the way the detachable part collapses when it is released by part of the flexible fin.

### DESCRIPTION OF THE PREFERRED EMBODIMENT

In view of the mentioned figures, one can see the folding cart, which comprises a rectangular tray-type rigid base (1), as the support for the corresponding and conventional bag that this type of cart has. In the bottom part of said base (1), two wheels (2) are assembled as rolling means so that the cart may be pulled. These wheels (2) are assembled in respective supports (3) which in turn act as support legs in the inoperative position of the cart.

In one of the edges of said base (1) close to the ends, two detachable parts (4) comprising the connecting and collapsing means of a frame structure with respect to the cited base (1), are assembled. Said structure is formed by two U-shaped frames (5) and (6), defining at the top respective grasping bridges in order for the cart to be used. The frame (5) is fastened in a jointed manner, according to joint (9), to the detachable parts (4), by means of the ends of the side branches of the former. The frame (5) is considered to be stationary, whereas the frame (6) is sliding with respect to the preceding one. It can take on an extendible or unfolded position, both frames being in an axial arrangement, or else taking a folded position of said frame sliding on the stationary frame (5). The sliding is carried out based on a sleeve (7) provided for and fastened on each one of the branches of the sliding frame (6), each sleeve (7) having two bushings (8) and (8'), the first one of them for the passing of the respective side branch of the sliding frame (6), and the bushing (8') for sliding and guiding on the corresponding branch of the stationary frame (5).

These structural characteristics of the cart of the invention are conventional and permit the folding of the wheels (2) with supports (3), by collapsing the supports over the bottom surface of the base (1), as well as the folding together of the frames (5) and (6), and the collapsing on the base itself (1), achieving total folding that permits the cart to be carried as if it were a bag.

Now then, as of said characteristics, the cart in question has a series of improvements and innovations that contribute to reinforcing the connections and joints between the different parts, as well as to optimize folding/unfolding and to attain greater resistance and ruggedness of the whole cart. The cart will be able to endure without any problems the load when the same is being pulled.

One of the improvements is centered on the blocking means between frames (5) and (6), when these frames are in the unfolded position, in order to prevent involuntary folding thereof. Said blocking means are provided for in the sliding sleeves (7) and in the stationary frame (5), specifically in the transversal branch or bridge (10) thereof.

Hence, a manually operated push button (11) has been provided for on the center part of the cited bridge (10) of the stationary frame (5), the push button being pushed by an inside spring (12).

When said push button (11) is pressed by hand against the spring (12), it produces the tilting of a pair of latches (13) assembled axially on the inside of the bridge (10) between the ends of the push button (11) and the ends of the bridge itself (10), in such a way that these latches (13) in an inoperative position lock with the respective lugs (14) emerging from the bushing (8') of each one of the sleeves (7), both frames (5) and (6) staying in an unfolded position.

In the event that one wishes to fold up the cart it will suffice to press the push button 10, causing the tilting of the latches (13), which unlock from the fingers (14) releasing the sleeves (7), which permits the folding to be carried out by sliding the frame (6) with respect to the frame (5).

On the other hand, the locking of the frame (5) with respect to the base (1) and the locking of the support (3) of the wheels (2) is carried out by means of the detachable parts (4), which like in a conventional cart are jointedly assembled between respective pairs of lugs (15) of the base (1). Said detachable parts (4) have a side wing (16) which in the usage or unfolded position of the cart is positioned on a channel (17) provided for in each one of the end parts of the bottom surface of the base (1), keeping the supports (3) of the wheels (2) in position, since an end section of said supports (3) is housed in each case in a hollow (18) of the base itself (1), a hollow (18) that is open at one of the sides in order to permit the collapsing towards that side of the respective support (3) and therefore, the folding thereof with the wheel (2) on the base (1), and whose open side is closed precisely by the side wing (16) of the detachable parts (4) in the usage or unfolded position of the cart, as it has just been stated.

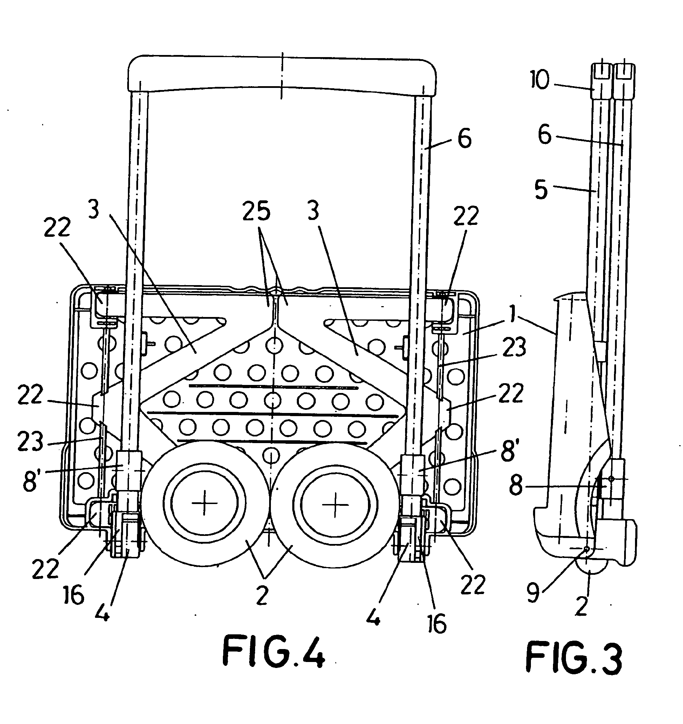

From these characteristics of the detachable part (4) and its blocking function of the supports (3) of the wheels (2), the novelty consists in that said part (4) has a flexible fin (19) approximately at a right angle, which remains cantilevered off and opposite the free end (6') of the side branches of the sliding frame (6), in such a way that if the whole cart is in the unfolded or usage position, a step (20) of the side edge of said fin (19) remains locked in a partition wall (21) corresponding to the base (1). From said position or location, if one desires to carry out the unlocking in order to achieve the folding, it will suffice to press the sliding frame (6) so that its free end (6') contacts and presses on the flexible fin (19), making the latter bend or be deformed and the unlocking between the step (20) thereof and the partition wall (21) is produced, then permitting the tilting of the whole cart formed by the frames (5-6) with the detachable part (4), tilting that involves that the side wing (16) of the detachable part (4) draws back from the channel (17). The open side of the hollow (18) is released, which permits the collapsing and folding of the respective support (3) of the wheels (2) on the base (1), as shown in figure 3.

Another characteristic of the cart is related to the supports (3) of the wheels (2). The supports have the particularity that in turn they comprise supports legs, for which purpose said supports (3) have a M-shape, with three jointable support points (22) corresponding to the ends and center vertex of said M shape. The joint is formed by a shaft (23) passing through said three points (22), the tilting of each support (3) taking place around its respective shaft (23).

The wheels (2) are assembled on said supports (3) sideways with reference to one of the vertexes (24), whereas the other vertex (25) is the one that comprises the support on the ground.

As it has been possible to verify by the aspects and innovations that the cart includes, this cart is more rugged and resistant than conventional carts, at the same time that the aforementioned connections and joints are reinforced. Furthermore, the folding/unfolding operations are made easier.

## Claims

1. A folding shopping cart, of those that comprise a rigid support base for the bottom of the bag, on whose base (1) the wheels (2) are jointedly assembled in a collapsible manner on the base itself (1), also including means for locating respective detachable parts (4) linked to a structure that the two frames (5, 6) form like a bridge, defining a grasping and pulling handle of the whole cart, the first frame (6) being slidable by means of double sleeves (7) with respect to the second frame (5), the second frame (5) being stationary, and being jointedly fastened to the detachable parts (4) assembled on the base (1), all carried out in such a way that in the usage or unfolded position the frames (5, 6) and a support (3) of the wheels (2) are blocked in order to prevent involuntary or undesired folding, **characterized in that** the blocking between the frames (5, 6), in the usage position, is materialized by the locking of respective fingers (14) provided for in sliding bushings (8') of the double sleeves (7) and respective retractable latches (13) provided for in points close to the ends of a bridge (10) being part of the stationary second frame (5), with the particularity that said latches (13) are connected to the ends of a manually operated push button (11), arranged in the center area of the respective bridge (10) of the stationary second frame (5), for the release of the latches (13) with respect to the fingers (14)
and to permit the folding by sliding of both frames (5, 6).

2. A folding shopping cart, according to claim 1, **characterized in that** the detachable parts (4), in which the ends of the stationary second frame (5) are fastened, have respectives flexible fins (19) with a general right angle shape that, in the normal usage and unfolding position of the cart, are locked in their edge to respective partition walls (21) provided for in the bottom surface of the rigid base (1), the detachable parts (4) blocking to prevent accidental folding; with the particularity that the ends (6') of the sliding first frame (6) face said flexible fins (19) in order to permit, by pushing of the ends (6') of said sliding first frame (6), the bending or deforming of the fins (19) and their corresponding release from the corresponding partition walls (21), allowing the collapsing of the detachable parts (4) and corresponding release of the supports (3) wherein the corresponding wheels (2) can be assembled, for the folding of said wheels.

3. A folding shopping cart, according to the preceding claims, **characterized in that** the supports (3) of the wheels (2) are comprised of respective M-shaped parts, with three jointable support points (22), a common shaft (23) passing through said three points (22); with the particularity that these three jointable point (22) correspond to the ends and center vertex of the M-shaped parts, whereas the corresponding wheel (2) is mounted sideways on a first vertex (24) of this same M-shaped part, a second vertex (25) comprising the support on the ground of the cart in its vertical position.

## Patentansprüche

1. Zusammenklappbarer Einkaufswagen von dem Typ, der einen starren Trageunterteil für den Boden der Tasche umfasst, wobei an diesem Unterteil (1) die Räder (2) einklappbar an dem Unterteil (1) selbst gelenkig angebracht sind, und der des Weiteren Einrichtungen zum Arretieren jeweiliger lösbarer Teile (4) enthält, die mit einer Struktur verbunden sind, die die zwei Rahmen (5, 6), wie eine Brücke bilden, um so einen Halte- und Ziehgriff des gesamten Wagens zu bilden, wobei der erste Rahmen (6) mittels Doppelhülsen (7) in Bezug auf den zweiten Rahmen (5) verschoben werden kann, der zweite Rahmen (5) stationär ist und gelenkig an den lösbaren Teilen (4) befestigt ist, die an dem Unterteil (1) angebracht sind, wobei all diese Teile so ausgeführt sind, dass in der Gebrauchs- bzw. Aufklappposition die Rahmen (5, 6) und eine Stütze (3) der Räder (2) gesperrt sind, um ungewolltes oder unerwünschtes Zusammenklappen zu verhindern, **dadurch gekennzeichnet, dass** das Sperren der Rahmen (5, 6) zueinander in der Gebrauchsposition durch das Verriegeln jeweiliger Finger (14), die in Gleitbuchsen (8') der Doppelhülsen (7) vorhanden sind, sowie jeweilige einziehbare Riegel (13) erreicht wird, die an Punkten nah an den Enden einer Brücke (10) vorhanden sind, die Teil des stationären zweiten Rahmens (5) ist, wobei die Riegel (13) insbesondere mit den Enden eines manuell betätigten Druckknopfes (11) verbunden sind, der im Mittelbereich der jeweiligen Brücke (10) des stationären, zweiten Rahmens (5) angeordnet ist, um die Riegel (13) in Bezug auf die Finger (14) zu lösen und das Zusammenklappen durch Verschieben beider Rahmen (5, 6) zu ermöglichen.

2. Zusammenklappbarer Einkaufswagen nach Anspruch 1, **dadurch gekennzeichnet, dass** die lösbaren Teile (4), in denen die Enden des stationären, zweiten Rahmens (5) befestigt werden, jeweilige flexible Rippen (19) mit einer im Allgemeinen rechtwinkligen Form haben, die in der normalen Gebrauchs- und Aufklappposition des Wagens an ihrem Rand an jeweiligen Trennwänden (21) verriegelt sind, die in der unteren Fläche des starren Unterteils (1) vorhanden sind, wobei die lösbaren Teile (4) sperren, um zufälliges Zusammenklappen zu verhindern, und wobei insbesondere die Enden (6') des gleitenden, ersten Rahmens (6) den flexiblen Rippen (19) zugewandt sind, um durch Drücken der Enden (6') des gleitenden, ersten Rahmens (6) das Biegen oder Verformen der Rippen (19) und ihr entsprechendes Lösen von den entsprechenden Trennwänden (21) zuzulassen, wodurch das Einklappen der lösbaren Teile (14) und das entsprechende Lösen der Stützen (3) ermöglicht wird, an denen die entsprechenden Räder (2) angebracht werden können, um die Räder zusammenzuklappen.

3. Zusammenklappbarer Einkaufswagen nach den vorangehenden Ansprüchen, **dadurch gekennzeichnet, dass** die Stützen (3) der Räder (2) aus jeweiligen M-förmigen Teilen mit drei gelenkig verbindbaren Tragepunkten (22) und einer gemeinsamen Welle (23) bestehen, die durch die drei Punkte (22) hindurchtritt, wobei diese drei gelenkig verbindbaren Punkte (22) insbesondere den Enden und dem mittleren Scheitelpunkt der M-förmigen Teile entsprechen, während das entsprechende Rad (2) seitlich an einem ersten Scheitelpunkt (24) dieses M-förmigen Teils angebracht ist und ein zweiter Scheitelpunkt (25) die Stütze des Wagens auf den Boden in seiner vertikalen Position umfasst.

## Revendications

1. Chariot pliant du type comprenant une base de support rigide pour le fond du sac, une base (1) sur laquelle les roues (2) sont assemblées conjointement de manière à pouvoir être escamotées sur la base elle-même (1), comportant également un moyen destiné à positionner des pièces détachables (4) respectives reliées à une structure que les deux cadres (5, 6) forment telle une entretoise, définissant une poignée de préhension et de traction de l'ensemble du chariot, le premier cadre (6) pouvant coulisser au moyen de doubles manchons (7), par rapport au second cadre (5), le second cadre (5) étant fixe, et étant fixé conjointement aux parties détachables (4) assemblées sur la base (1), toutes mises en oeuvre de telle sorte que dans la position d'utilisation ou dépliée, les cadres (5, 6) et un support (3) des roues (2) soient bloqués afin d'empêcher un pliage involontaire ou non souhaité, **caractérisé en ce que** le blocage entre les cadres (5, 6), dans la position d'utilisation, est matérialisé par le verrouillage de doigts (14) respectifs prévus dans des douilles coulissantes (8') des doubles manchons (7) et des loquet rétractables (13) respectifs prévus dans des points proches des extrémités d'une entretoise (10) faisant partie du second cadre fixe (5), avec la particularité que lesdits loquets (13) sont raccordés aux extrémités d'un bouton poussoir (11) actionné manuellement, agencé dans la zone centrale de l'entretoise (10) respective du second cadre fixe (5), pour le dégagement des loquets (13) par rapport aux doigts (14) et pour permettre le pliage par coulissement des deux cadres (5, 6).

2. Chariot pliant selon la revendication 1, **caractérisé en ce que** les pièces détachables (4), dans lesquelles les extrémités du second cadre fixe (5) sont fixées, ont des ailettes souples (19) respectives avec une forme générale d'angle droit qui, dans la position d'utilisation et dépliée normale du chariot, sont verrouillées au niveau de leur bord à des parois de séparation (21) respectives prévues dans la surface inférieure de la base rigide (1), les pièces détachables (4) appliquant un blocage pour empêcher un pliage accidentel ; avec la particularité que les extrémités (6') du premier cadre coulissant (6) font face auxdites ailettes souples (19) afin de permettre, par poussée des extrémités (6') dudit premier cadre coulissant (6), la flexion ou la déformation des ailettes (19) et leur dégagement correspondant depuis les parois de séparation (21) correspondantes, permettant l'escamotage des parties détachables (4) et le dégagement correspondant des supports (3) dans lesquels les roues (2) de correspondance peuvent être assemblées, pour le pliage desdites roues.

3. Chariot pliant selon les revendications précédentes, **caractérisé en ce que** les supports (3) des roues (2) sont constitués de pièces en forme de M respectives, avec trois points de support pouvant être joints (22), un arbre commun (23) passant à travers lesdits trois points (22) ; avec la particularité que ces trois points pouvant être joints (22) correspondent aux extrémités et au sommet central des pièces en forme de M, alors que la roue de correspondance (2) est montée de côté sur un premier sommet (24) de cette même pièce en forme de M, un second sommet (25) comprenant le support sur le fond du chariot dans sa position verticale.
